# EUROPÄISCHE PATENTSCHRIFT

(11) **EP 1 681 237 B1**
(45) Veröffentlichungstag und Bekanntmachung des Hinweises auf die Patenterteilung: **05.09.2007**
(21) Anmeldenummer: 05000953.9
(22) Anmeldetag: 18.01.2005
(51) Int. Cl.: B64D 11/00, B64D 11/04, A47B 31/06

(54) **Serviertrolley für Passagierkabinen**
Catering trolley for passenger cabins
Chariot de service pour des cabines de passagers

(43) Veröffentlichungstag der Anmeldung: 19.07.2006
(73) Patentinhaber: EDAG-SIGMA Concurrent Engineering GmbH, 22453 Hamburg (DE)
(72) Erfinder: Weininger, Jürgen, 22297 Hamburg (DE); Freudenberg, Jürgen, 26131 Oldenburg (DE)
(74) Vertreter: Glawe, Delfs, Moll

(56) Entgegenhaltungen:
- EP-A- 0 546 968
- EP-A- 1 101 433
- FR-A- 2 771 393

## Beschreibung

Die Erfindung betrifft einen Serviertrolley für Passagierkabinen, insbesondere von Flugzeugen, mit einem kastenförmigen Hauptkörper, dessen Inneres als Aufnahmeraum ausgebildet ist und Aufnahmeelemente zum beabstandeten Halten einer Mehrzahl gefüllter Tabletts aufweist, und eine Entnahmeposition zum Entnehmen der Tabletts aus dem Aufnahmeraum vorgesehen ist. Ein Serviertrolley gemäß dem Oberbegriff des Anspruchs 1 ist aus EP 1101433 A1 bekannt.

Insbesondere bei länger dauernden Reisen von mehreren Stunden ist es bei Transportmitteln, die viele Passagiere in sitzender Anordnung in einer Kabine transportieren, üblich, dass die Passagiere am Platz mit Nahrungsmitteln und Getränken versorgt werden. Zur Versorgung der Passagiere mit Speisen, insbesondere mit warmen Speisen, werden spezielle Serviertrolleys eingesetzt. Sie dienen dazu, mehrere bereits vollständig eingedeckte Tabletts aufzunehmen. Auf diesen ist alles vorbereitet, die Tabletts müssen nur noch vom Servicepersonal an die Passagiere verteilt werden. Damit diese Serviertrolleys auch unter räumlich begrenzten Verhältnissen, wie sie insbesondere an Bord von Verkehrsflugzeugen herrschen, zweckmäßig eingesetzt werden können, müssen sie bestimmten Anforderungen genügen. Dazu zählt auch, dass sie bestimmte Abmessungen nicht überschreiten dürfen. Ansonsten könnte es passieren, dass sie durch den Kabinengang nicht mehr bewegt werden können, oder dass sie nicht mehr in die dafür vorgesehenen Standplätze in den Bordküchen passen würden. Bei Weiterentwicklungen von Serviertrolleys ist also stets zu beachten, dass die standardmäßigen Beschränkungen eingehalten werden.

Bekannte Serviertrolleys für Tabletts sind so ausgebildet, dass sie einen kastenförmigen Hauptkörper aufweisen. Dieser ist an einer oder gegenüberliegenden Seiten offen, und ggf. mit einer Tür verschließbar. In diesem Hauptkörper ist eine Mehrzahl von gefüllten Tabletts übereinander mit Abstand entlang seitlichen Führungen gestapelt. Sie können von dem Servicepersonal entnommen und an die Passagiere ausgegeben werden. Dabei erfolgt die Entnahme in der Regel von oben nach unten. Das bedeutet, dass das Servicepersonal sich umso tiefer zur Entnahme bücken muss, je weniger Tabletts in den Serviertrolleys noch sind. Da in der Regel aus Gründen der Sicherheit nur jeweils ein Tablett entnommen werden kann, so muss das Servicepersonal eine Vielzahl von Bückbewegungen ausführen. Dies ist anstrengend für das Personal. Außerdem ist es unfallträchtig, da es beim Wiederaufrichten leicht zu Unfällen kommen kann, z. B. mit sich bewegenden Passagieren, die zum Entnehmen von Gepäck aus den oberen Gepäckfächern aufgestanden sind.

In EP 1101433 A1 sind die Förderbänder als endlose Bänder ausgestaltet, und im Serviertrolley nach EP 0546968 A1 wird ein einzelnes Förderband im mittleren, unteren Bereich aufgerollt.

Der Erfindung liegt die Aufgabe zugrunde, einen Serviertrolley der eingangs genannten Art derart zu verbessern, dass er leichter zu handhaben ist und damit auch zur Verringerung des Unfallrisikos beiträgt.

Die erfindungsgemäße Lösung liegt in einem Serviertrolley mit den Merkmalen des Anspruchs 1. Vorteilhafte Weiterbildungen sind Gegenstand der abhängigen Ansprüche.

Erfindungsgemäß ist bei einem Serviertrolley für Passagierkabinen, insbesondere von Flugzeugen, mit einem kastenförmigen Hauptkörper, dessen Inneres als Aufnahmeraum ausgebildet ist und der Aufnahmeelemente zur beabstandeten Halterung einer Mehrzahl gefüllter Tabletts aufweist, vorgesehen, dass eine Fördereinrichtung mit vertikaler Förderrichtung für die gefüllten Tabletts vorgesehen ist, die einen Antrieb und Förderbänder mit den Aufnahmeelementen umfasst, die zum Angriff an gegenüberliegende Seiten der Tabletts ausgebildet sind, und in einem oberen Bereich des Hauptkörpers ein Speicherraum für die Bänder gebildet ist.

Die Erfindung beruht auf dem Gedanken, mit der Fördereinrichtung einen Aufzug für die gefüllten Tabletts vorzusehen. Diese ist so ausgebildet, dass die Tabletts zu einer Entnahmeposition im oberen Bereich gebracht werden, aus der sie einzeln entnehmbar sind. Zum Heben der Tabletts sind Förderbänder vorgesehen, die so angeordnet sind, dass sie Tabletts an gegenüberliegenden Seiten erfassen. Diese Anordnung ermöglicht nicht nur ein lagerichtiges Anheben der Tabletts, sondern ist auch sehr raumsparend. Die in vertikaler Förderrichtung arbeitenden Förderbänder benötigen nur wenig Tiefe, so dass der erfindungsgemäße Serviertrolley nicht breiter ausfällt als herkömmliche. Diese raumsparende Anordnung ist deshalb ermöglicht, da die Erfindung im oberen Bereich des Hauptkörpers einen Speicherraum vorsieht, in dem sich Abschnitte der Förderbänder raumsparend zusammenlegen, nachdem sie über die Entnahmeposition gelaufen sind und die Tabletts entnommen sind. Das Zusammenlegen kann auf verschiedene Weise erfolgen, beispielsweise durch Falten oder Aufrollen. Zusätzlicher Raum für einen nach unten laufenden Abschnitt der Förderbänder ist dank der Erfindung nicht erforderlich. Der für die erfindungsgemäße Fördereinrichtung erforderliche Raumbedarf in der Breite ist daher minimiert.

Der für die erfindungsgemäß gestaltete Fördereinrichtung erforderliche Bauraum ist auf solche Werte verringert, die in der Größenordnung des vorhandenen Spiels zwischen Tablett und Seitenwand des Hauptkörpers liegen. Das bedeutet, dass ein erfindungsgemäß mit der Fördereinrichtung versehener Serviertrolley nicht breiter zu sein braucht als ein herkömmlicher Serviertrolley. Die Erfindung ermöglicht es, die Fördereinrichtung unter Beibehaltung der Standardbreite im wesentlich seitlich anzuordnen. Anders als bei einer Anordnung an einer der Stirnseiten ist damit ein Beladen bzw. Entnehmen der Tabletts von vorne und von hinten ermöglicht. Das ist insbesondere bei Trolleys mit Türen an beiden Stirnseiten ein erheblicher Handhabungsvorteil.

Der Erfindung liegt die Erkenntnis zugrunde, mit der erfindungsgemäßen Fördereinrichtung eine Trennung von Belade-und Entladeposition zu ermöglichen. Herkömmlicherweise werden die Tabletts genau an der Stelle aus dem Trolley entnommen, an dem sie eingesetzt wurden. Unten in den Trolley eingesetzte Tabletts müssen unten entnommen werden. Der Erfindung gebührt das Verdienst, diese feste Kopplung zwischen Belade- und Entnahmeposition aufzuheben. Während die Beladung unverändert auf den verschiedenen Etagen (gleichzeitig) erfolgen kann, ist es dank der Erfindung ermöglicht, die Tabletts an einer bequem zu erreichenden oberen Position zu entnehmen, und zwar unabhängig davon, auf welcher Etage das jeweilige Tablett beim Beladen eingesetzt wurde. Das Entnehmen ist damit erheblich erleichtert.

Aufgrund der besseren Handhabbarkeit ergibt sich zusätzlich eine Steigerung der Servicegeschwindigkeit, -sicherheit und -qualität. Die Erfindung vereinigt damit die Vorteile bezüglich besserer Handhabbarkeit, verringerter Unfallgefahr mit dem Vorteil der Einhaltung der Standardgeometrie, und zwar sowohl hinsichtlich der für die Unterbringung relevanten äusseren Abmessungen wie auch der für die Tablettaufnahme relevanten Innenabmessungen.

Zweckmäßigerweise sind die Förderbänder so ausgebildet, dass sie sich über einen wesentlichen Teil der Länge einer Seitenwand des Hauptkörpers erstrecken. Unter einem wesentlichen Teil wird hierbei ein Anteil von 50% oder mehr verstanden. Dies ermöglicht die Ausbildung lang gestreckter Aufnahmeelemente für die Tabletts. Damit ergibt sich eine sichere Führung der Tabletts nicht nur im stationären Zustand, sondern auch während des Fördervorgangs. Außerdem hat eine derartige Ausbildung der Bänder den Vorteil, dass bei gleich bleibendem Querschnitt die Dicke der Bänder geringer gewählt sein kann. Damit verringert sich der Raumbedarf der erfindungsgemäßen Fördereinrichtung. Außerdem wird dadurch erreicht, dass die Seitenwand durch die Förderbänder weitgehend bedeckt ist. Damit wird ein impliziter Schutz gegenüber unerwünschten Anhaftungen von Speiseresten an dem Inneren der Seitenwand erreicht.

Die Förderbänder sind vorzugsweise mit Ausbildungen versehen, die einen vordefinierten Faltvorgang bewirken. Unter Ausbildungen wird hierbei all das verstanden, was dem Förderband eine vorbestimmte Faltung aufprägt. Die Ausbildungen können so ausgeführt sein, dass sie Faltlinien an dem Förderband bestimmen. Dazu ist die Ausbildung vorzugsweise als Verdünnung, weiter vorzugsweise als eine Einkerbung ausgeführt. Ihre Lage und Anordnung bestimmt den Ort und die Richtung, die die angrenzenden Bereiche des Bands beim Falten einnehmen. Die Ausbildungen erleichtern damit ein geordnetes und gezieltes Falten der Förderbänder im Speicherraum. Dazu sind die Ausbildungen zweckmäßigerweise quer zur Förderrichtung angeordnet. Die Ausbildungen können auch als Gelenke ausgeführt sein, über die in sich steife Platten verbunden sind.

Die Förderbänder sind vorzugsweise in einer Richtung quer zu ihrer Bandebene vorgespannt. Eine solche Vorspannung dient dazu, dem Förderband mit seinem Material eine Vorzugsrichtung beim Falten aufzuprägen. Die Vorspannung kann auf verschiedene Weise erfolgen. Zum Beispiel kann sie sich aus den Eigenschaften des Materials ergeben. Es hat sich bewährt, die fördernden Bänder thermisch zu verspannen. So kann auf besonders einfache und zweckmäßige Weise erreicht werden, dass die Förderbänder sich in der gewünschten Weise im Speicherraum zusammenlegen. Zweckmäßigerweise ist dazu als Material für die Förderbänder ein *thermoplastisches* Material, wie z. B. Polypropylen vorgesehen. Vorzugsweise ist das Material so vorbehandelt, dass es flammhemmend ist.

Der Antrieb ist zweckmäßigerweise so ausgebildet, dass er einen Motor, einen Energiespeicher und eine Schalteinrichtung umfasst. Der Motor dient zum Antrieb der fördernden Bänder in Förderrichtung. Da damit ein Anheben der gefüllten Tabletts verbunden ist, wird ihm die dazu erforderliche Energie aus dem Energiespeicher zugeführt. Der Antrieb wird häufig elektrisch mit einem Elektromotor ausgeführt sein. Vorzugsweise umfasst dazu der Energiespeicher Hochkapazitäts-Kondensatoren. Sie bieten den Vorteil geringen Gewichts und vermeiden Risiken, wie sie von elektrochemischen Zellen mit ihren zum Teil aggressiven oder giftigen Inhaltsstoffen ausgehen. Es können aber auch andere Antriebskonzepte vorgesehen sein. Alternativen sind zum Beispiel ein Druckluftmotor mit einem Druckspeicher, wie einer Pressluftflasche, als Energiespeicher. Diese Alternative hat den Vorteil, dass keine Gefahren durch Brand oder Kurzschluss wie bei einem elektrischen Antriebskonzept bestehen. Zudem ist in Verkehrsflugzeugen Druckluft meist problemlos verfügbar. Es ergeben sich auch keine Probleme in Bezug auf elektromagnetische Abstrahlungen. Eine weitere Alternative besteht in einem rein mechanischen Antrieb mit einem Federspeicher als Energiespeicher, der auf eine kraftabgebende Welle (oder Hebel) als Motor wirkt. Diese Alternative hat den Vorteil, dass sie völlig emissionsfrei ist. Der Federspeicher ist dazu zweckmäßigerweise mit einer Spannkupplung versehen, an die eine Spanneinrichtung anschließbar ist. Damit kann der Federspeicher noch am Boden, zum Beispiel beim Befüllen des Trolley, gespannt werden. Eine besondere bordseitige Ausrüstung des Flugzeugs ist dann nicht erforderlich. Zur Steuerung des Förderbetriebs ist die Schalteinrichtung vorgesehen. Es ist zweckmäßig, den Antrieb unterhalb des Hauptkörpers anzuordnen. Dies hat den Vorteil, dass kein zusätzlicher Bauraum in der Breite beansprucht ist. Weiter ist der Antrieb gut zugänglich, bspw. für ggf. erforderliche Wartungsarbeiten. Da der Antrieb damit an der tiefstmöglichen Stelle angeordnet ist, ergibt sich weiter ein günstiger Einfluss in Bezug auf die Absenkung des Schwerpunktes. Die Stabilität des erfindungsgemäßen Serviertrolleys erhöht sich dadurch.

Zweckmäßigerweise ist der Antrieb mit einer Indexiereinrichtung versehen. Die Indexiereinrichtung ist dazu ausgebildet, den Antrieb für eine bestimmte Zeitdauer so lange einzuschalten, bis das nächste Tablett die Entnahmeposition erreicht hat. Der Antrieb schaltet sich dann selbständig ab. Der Benutzer ist damit von der Aufgabe befreit, die Tätigkeit des Antriebs zu überwachen und ihn im geeigneten Moment abzuschalten, wenn das nächste Tablett die Entnahmeposition erreicht hat. Die Standardschrittweite ist hierbei vorgegeben durch den Abstand der Aufnahmeelemente an den Bändern. Es kann aber auch vorkommen, dass Tabletts überhoch befüllt sind. In solchen Fällen wird nicht an jeder durch die Aufnahmeelemente vorgegebenen Position ein Tablett eingesetzt, sondern nur in jeder zweiten oder gar dritten. Um das nächste Tablett an die Entnahmeposition zu bringen, muss die Indexiereinrichtung einen Schritt mit entsprechend doppelter oder gar dreifacher Weite vorsehen. Zweckmäßigerweise ist dazu vorgesehen, dass die Indexiereinrichtung eine Schrittweiteneinstelleinrichtung aufweist. Der Benutzer braucht dann nur einzustellen, mit welchem Abstand die Tabletts in den Serviertrolley eingesetzt sind. Die Indexiereinrichtung sorgt dann dafür, dass die Förderbänder um den entsprechenden Betrag soweit betätigt werden, dass auch bei überhoch beladenen Tabletts das nächste Tablett an der Entnahmeposition zur Verfügung steht.

Zweckmäßigerweise ist eine Endabschaltung im oberen Bereich der Fördereinrichtung vorgesehen. Dazu kann ein Sicherheitsschalter in Gestalt einer Lichtschranke oder einer mechanischen Berührungseinrichtung in vorteilhafter Weise vorgesehen sein. Damit wird vermieden, dass die Tabletts zu weit nach oben gefördert werden. Beschädigungen auf Grund von überhoch beladenen Tabletts, bspw. mit einem zu hohen Fremdkörper, werden dadurch wirkungsvoll verhindert.

Vorzugsweise ist weiter ein Sicherheitsschalter im unteren Bereich vorgesehen. Er ist so angeordnet, dass er auslöst, wenn sich ein Tablett in unterster Position befindet. Dieses kann als Füllstoppsignal beim Beschicken des erfindungsgemäßen Serviertrolleys mit Tabletts verwendet werden.

Die Erfindung wird nachfolgend unter Bezugnahme auf die beigefügte Zeichnung erläutert, in der ein vorteilhaftes Ausführungsbeispiel der Erfindung dargestellt ist. Es zeigen:
- Fig. 1: eine perspektivische Darstellung eines Ausführungsbeispiels eines erfindungsgemäßen Serviertrolleys;
- Fig. 2: eine teilweise geöffnete Darstellung des Serviertrolleys gemäß Fig. 1;

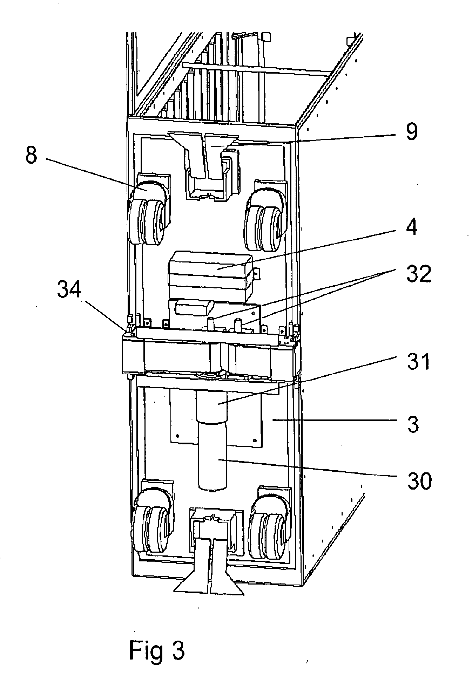

- Fig. 3: eine Ansicht von unten des Serviertrolleys gemäß Fig. 1;
- Fig. 4: eine perspektivische Gesamtansicht eines Förderbands gemäß der vorgehenden Erfindung;
- Fig. 5: eine vergrößerte Teilansicht des in Fig. 4 dargestellten Förderbands;
- Fig. 6: eine weiter vergrößerte Ansicht des Förderbands gemäß Fig. 4 und 5 in zusammengefaltetem Zustand; und
- Fig. 7: eine perspektivische Darstellung einer Schalteinrichtung.

Ein erfindungsgemäßer Serviertrolley besteht im Wesentlichen aus einem Hauptkörper 1 mit je einer Tür 10 an seinen Stirnseiten und einem Satz von vier Doppellaufrollen 8 an seiner Unterseite. Die Doppellaufrollen 8 sind jeweils für sich lenkbar an der Unterseite angeordnet. Zumindest ein Paar der Laufrollen 8 kann mittels einer Bremse festgesetzt werden. Zur Betätigung der Bremse ist ein Pedalsatz 9 an den Stirnseiten des Serviertrolleys vorgesehen.

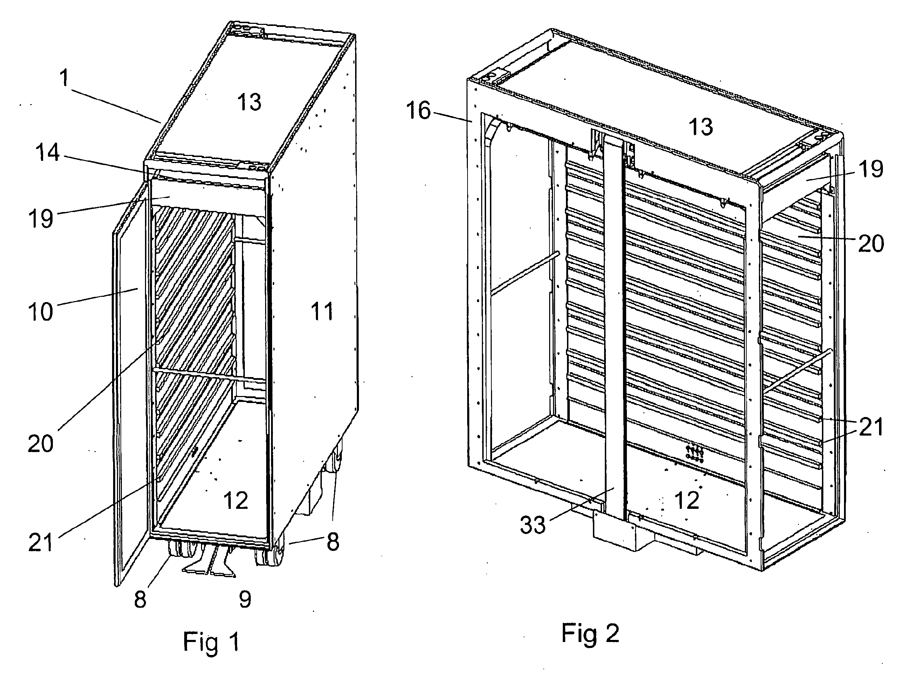

Der Hauptkörper 1 ist von kastenartiger Gestalt mit zwei gegenüberliegenden Seitenwänden 11, einem Boden 12 sowie einer Deckplatte 13. An seinen Stirnseiten 14 ist der Hauptkörper 1 offen ausgebildet. Dort ist jeweils über Scharniere 19 eine Tür 10 zum Verschließen der Stirnseite 14 angeordnet. Die vordere Tür 10 ist in den Figuren geöffnet, die hintere Tür (ohne Bezugsziffer) geschlossen dargestellt. Die Seitenwände 11, der Boden 12 sowie die Deckplatte 13 sind als Blechtafeln ausgeführt, die auf einem Chassis 16 befestigt sind. Bei dem dargestellten Ausführungsbeispiel ist aus Gründen einer besseren Darstellung das Chassis 16 die tragende Struktur des Hauptkörpers 1. Es ist aber nicht erforderlich, dass der Hauptkörper 1 über ein solches Chassis verfügt; es kann auch eine selbsttragende Bauweise vorgesehen sein. Die selbsttragende Bauweise bietet den Vorteil eines geringeren Gewichts, insbesondere bei einer Ausführung aus modernen Werkstoffen wie Kohlefaser anstatt herkömmlichen Stahl- oder Aluminiumblech. Fig. 2 zeigt den Hauptkörper 1 mit abgenommener Seitenwand 11, Tür 10 und Deckplatte 13. Der Hauptkörper weist in seinem Inneren einen Hohlraum auf, der als Aufnahmeraum für Tabletts (nicht dargestellt) dient. Um die Tabletts in dem Hauptkörper 1 zu haltern, sind innenseitig an den Seitenwänden 11 Aufnahmeelemente 21 vorgesehen. Die Aufnahmeelemente 21 sind von leistenartiger Gestalt und laufen in horizontaler Richtung nahezu über die gesamte Tiefe des Hauptkörpers 1. Sie fungieren als Halteelemente für die etagenweise in den Serviertrolley eingesetzten Tabletts, und gleichzeitig dienen sie als Führungsschienen beim Einbringen bzw. Entnehmen der Tabletts aus dem Serviertrolley.

Die Aufnahmeelemente 21 sind nicht direkt an der Innenseite der Seitenwand 11 angeordnet, sondern befinden sich vielmehr an der Innenseite eines breiten Förderbands 20. Das Förderband 20 ist vertikal verschieblich an der Innenseite der Seitenwand 11 geführt. Mittels eines Antriebs, der später noch erläutert wird, kann das Förderband 20 aus seiner dargestellten Grundposition, in der die Aufnahmeelemente 21 bis zum Boden 12 reichen, vertikal nach oben verfahren werden. Dabei bewegen sich die an dem Förderband 20 angeordneten Aufnahmeelemente 21 ebenfalls mit nach oben, wodurch die auf den Aufnahmeelementen 21 gehalterten Tabletts nach oben gefördert werden.

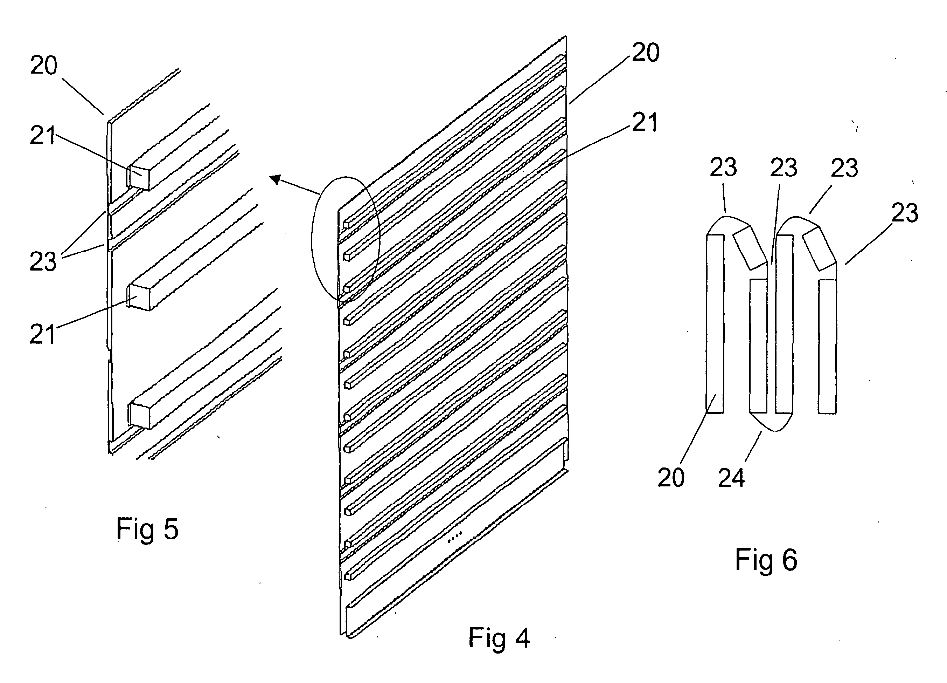

Der Aufbau des Förderbands 20 wird nachfolgend unter Bezugnahme auf die Figuren 4 bis 6 erläutert. Das Förderband 20 besteht vorzugsweise aus einem biegsamen Kunststoffmaterial, wie bspw. Polypropylen (PP). Es ist mit solchen Additiven versehen, dass es flammhemmend ist gemäß einschlägigen Luftfahrt-Vorschriften ist. Es weist bei einer Stärke von etwa 2mm solche Abmessungen auf, dass seine Breite sich über einen Großteil der Tiefe des Hauptkörpers 1 erstreckt. In dem dargestellten Ausführungsbeispiel erstreckt sich das Förderband über etwa 90% der Tiefe. Die Breitenabmessungen des Förderbands 20 entsprechen etwa den Gesamtlängenabmessungen der je Etage aufzunehmenden Tabletts. In der Regel sind zwei oder drei große Tabletts oder sechs kleine Tabletts je Etage vorgesehen. Die leistenartigen Aufnahmeelemente 21 sind an den zur Innenseite gewandten Flächen des Förderbands 20 angeordnet. Sie können aufgesetzt sein, es ist aber auch möglich, sie einstückig mit dem Förderband 20 auszubilden. Die Aufnahmeelemente 21 sind quer zur Förderrichtung, die durch einen Pfeil in Fig. 4 symbolisiert ist, angeordnet.

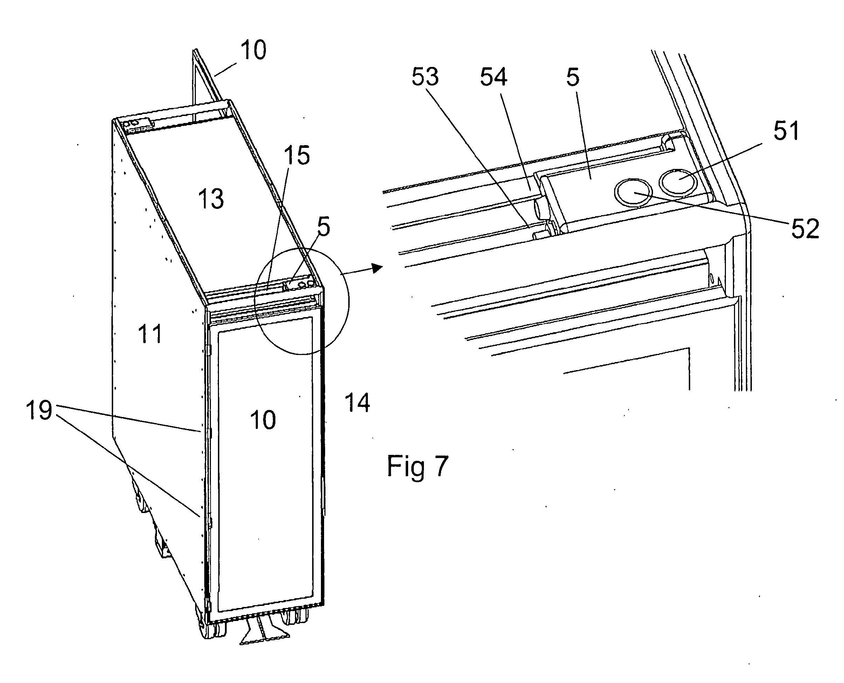

Das Förderband 20 weist zwei Arten von Ausbildungen auf, um ein vordefiniertes Falten zu erreichen. Zum einen sind quer zur Förderrichtung verlaufende Nuten 23, 24 an dem Förderband 20 angeordnet. In dem dargestellten Ausführungsbeispiel sind jeweils zwei Nuten 23 einander benachbart an der Innenseite des Förderbands 20 ausgebildet, während an der Außenseite des Förderbands 20 in einigem Abstand eine weitere Nut 24 vorgesehen ist. Das Förderband 20 ist damit in Abschnitte mit jeweils zwei nach innen weisenden Nuten 23 und eine nach außen weisende Nut 24 gegliedert. Die Ausbildung dieser Nuten 23, 24 in dem Förderband 20 hat die Wirkung, dass es sich wie eine Faltwand zusammenlegen lässt (siehe Fig. 7). Damit ist es ermöglicht, dass sich das Förderband 20 der Förderbewegung nach oben mit seinem oberen Bereich in einem Speicherraum (Faltraum 19) im oberen Bereich des Hauptkörpers 1 Platz sparend zusammenlegt. Dazu ist das Förderband 20 mittels einer nicht dargestellten Führung so geführt, dass es über den größten Teil der Höhe des Hauptkörpers 1 vom Boden 12 ausgehend entlang der Seitenwand 11 geführt ist, und beim Eintritt in den Faltraum 19 von seiner Führung freikommt, um sich auf diese Weise in dem Faltraum 19 zusammenlegt. Es versteht sich, dass das Volumen des Faltraums 19 so bemessen ist, dass die zusammengefalteten Bänder der beiden Seitenwände 11 darin aufnehmbar sind.

Zum anderen ist das Förderband 20 vorzugsweise thermisch vorgeformt. Dadurch wird erreicht, dass es sich beim Eintritt in den Faltraum 19 selbsttätig in der durch die Nuten 23, 24 vorgegebenen Weise zusammenfaltet.

Für den Antrieb der Förderbänder 20 ist eine Antriebseinheit 3 vorgesehen. Sie umfasst einen Motor 30, der über ein Getriebe 31 auf zwei parallel angeordnete Antriebswalzen 32 wirkt. Zur Energieversorgung des Antriebsmotors 30 ist ein Akkumulator 4 als Energiespeicher vorgesehen. Der Akkumulator 4 kann beispielsweise in Lithium-Ionen-Technologie ausgeführt sein. Eine Gewicht sparende Alternative besteht darin, den Akkumulator 4 mit Hochkapazitätskondensatoren (sog. Gold-Caps) zu versehen. Die Betätigung erfolgt mittels einer Betätigungseinheit 5, die vorzugsweise in einer Versenkung 15 am Rand der Deckplatte 13 des Hauptkörpers 1 angeordnet ist. Die Antriebseinheit 3 ist zweckmäßigerweise an der Unterseite des Bodens 12 angeordnet. Diese Anordnung hat den Vorteil, dass sie keinen Stauraum im Hauptkörper 1 kostet, dass der Antrieb dort ferner verhältnismäßig geschützt zwischen Laufrollen 8 ist, und dass sich dank der tiefen Anbringung ein günstiger Einfluss auf die Schwerpunktlage des Serviertrolleys ergibt. Zweckmäßigerweise sind die Komponenten der Antriebseinheit 3 mittels eines nicht dargestellten Gehäuses abgedeckt. Über die Antriebswalzen 32 sind zwei Antriebsriemen 33 geführt, die sich über eine Umlenkrolle 34 im Bereich des Übergangs zwischen Boden 12 und Seitenwand 11 zwischen Seitenwand 11 und Förderband 20 nach oben erstrecken, wo sie über eine an der Oberseite des Chassis 16 angeordnete Spannrolle 35 geführt sind. Der andere Abschnitt des Antriebriemens 33 erstreckt sich über die Spannrolle 34 entlang des Förderbands 20, an dessen Unterseite es befestigt ist. Der Antrieb der Förderbänder 20 erfolgt in der Weise, dass durch den Antriebsmotor 30 über das Getriebe 31 und die Antriebswalzen 32 die Antriebsriemen 33 so bewegt werden, dass das Förderband 20 bei der Aufwärtsbewegung geschoben und bei der Abwärtsbewegung gezogen wird. Zur Erreichung einer hohen Positioniergenauigkeit ist der Antriebsriemen 33 als Zahnriemen ausgeführt.

Die Betätigungseinheit 5 weist mehrere Schalter auf. Vorgesehen ist ein Ein-/Ausschalter 53, der vorzugsweise mit einer Leuchtanzeige zur Visualisierung des eingeschalteten Zustands versehen ist. Ferner sind zwei Richtungsschalter 51, 52 vorgesehen, bei deren Betätigung das Förderband 20 in Förderrichtung nach oben oder in Gegenrichtung bewegt wird. Die Betätigungseinheit 5 enthält eine Indexierungseinrichtung (nicht dargestellt), die beim Betätigen der Schalter 51, 52 den Antriebsmotor 30 so lange in der gewünschten Richtung ansteuert, bis das Förderband 20 um eine Wegstrecke entsprechend dem Abstand zweier benachbarter Aufnahmeelemente 21 gehoben oder gesenkt wurde. Bewährt ist eine Ausführung der Indexierungseinrichtung, bei der der Antriebsriemen 33 mehrere Durchbohrungen aufweist, die mittels einer Lichtschranke abgetastet werden. Die Durchbohrungen sind gleichmäßig beabstandet. Ihre Anzahl entspricht der Zahl der Aufnahmeleisten 21 an den Förderbändern zuzüglich Indexierungsöffnungen für die Endpositionen.

Um die Förderbänder 20 nach vollständigem Entladen des Serviertrolleys schnell nach unten zu bewegen, ist ein Schalter 54 vorgesehen. Wird er betätigt, so wird das Förderband 20 ohne Rücksicht auf die Indexierungseinrichtung so weit nach unten verfahren, bis sein Endlageschalter (nicht dargestellt) das Erreichen der unteren Position meldet. Zweckmäßigweise ist weiter ein oberer Grenzlageschalter vorgesehen. Er dient dazu, ein Anstoßen oder Eindringen des obersten Tabletts in den Faltraum 19 zu verhindern. Als Geber kann vorzugsweise eine Lichtschranke, eine flächig wirkende Zeilenkamera oder auch eine mechanisch wirkende Prallplatte vorgesehen sein. Alternativ oder zusätzlich kann auch eine Markierungsöffnung an dem Antriebsriemen 33 vorgesehen sein, die mittels einer vorzugsweise am Boden 12 angeordneten Lichtschranke abgetastet wird. Diese Anordnung hat den Vorzug einer besonders kompakten Anordnung, bei der möglichst viele Komponenten am Boden 12 angeordnet sind.

Gewünschtenfalls kann für die Indexierungseinrichtung noch eine gesonderte Eingabevorrichtung vorgesehen sein. Über diese wird eingestellt, ob normal hohe Tabletts auf jedem der Aufnahmeelemente 21 angeordnet sind, oder ob überhohe Tabletts vorgesehen sind, bei denen nur jeweils jedes zweite oder dritte Aufnahmeelement 21 mit einem Tablett versehen ist. In diesem Fall steuert die Indexierungseinrichtung den Antrieb 3 so an, dass gleich um eine entsprechend erhöhte Strecke verfahren wird.

## Patentansprüche

1. Serviertrolley für Passagierkabinen, insbesondere von Flugzeugen, mit einem kastenförmigen Hauptkörper (1), dessen Inneres als Aufnahmeraum ausgebildet ist und der Aufnahmeelemente (21) zur beabstandeten Halterung einer Mehrzahl gefüllter Tabletts aufweist, wobei
eine Fördereinrichtung mit vertikaler Förderrichtung für die gefüllten Tabletts vorgesehen ist, die einen Antrieb (3) und Förderbänder (20) mit den Aufnahmeelementen (21) aufweist, die zum Angriff an gegenüberliegenden Seiten (11) der Tabletts ausgebildet sind, **dadurch gekennzeichnet, dass** in einem oberen Bereich des Hauptkörpers ein Speicherraum (19) für die Förderbänder (20) gebildet ist.

2. Serviertrolley nach Anspruch 1,
**dadurch gekennzeichnet, dass**
die Förderbänder (20) mit Ausbildungen zum Bewirken eines vordefinierten Faltvorgangs versehen sind.

3. Serviertrolley nach Anspruch 2,
**dadurch gekennzeichnet, dass**
an den Förderbändern (20) quer zu einer Förderrichtung verlaufende Faltfugen (23, 24) ausgeformt sind.

4. Serviertrolley nach einem der vorangehenden Ansprüche,
**dadurch gekennzeichnet, dass**
die Faltfugen wechselweise einzeln oder paarweise auf gegenüberliegende Seiten des Förderbands (20) vorgesehen sind.

5. Serviertrolley nach einem der vorangehenden Ansprüche,
**dadurch gekennzeichnet, dass**
die Förderbänder (20) in einer aus der Bandebene weisenden Richtung vorgespannt sind.

6. Serviertrolley nach Anspruch 5,
**dadurch gekennzeichnet, dass**
die Förderbänder (20) thermisch vorgespannt sind.

7. Serviertrolley nach einem der vorangehenden Ansprüche,
**dadurch gekennzeichnet, dass**
die Förderbänder (20) aus einem Polypropylen-Material hergestellt sind.

8. Serviertrolley nach einem der vorangehenden Ansprüche,
**dadurch gekennzeichnet, dass**
die Förderbänder (20) flammhemmende Zusatzstoffe aufweisen.

9. Serviertrolley nach einem der vorangehenden Ansprüche,
**dadurch gekennzeichnet, dass**
der Antrieb (3) einen Motor (30), einen Energiespeicher (4) und eine Schalteinrichtung (5) umfasst.

10. Serviertrolley nach Anspruch 9,
**dadurch gekennzeichnet, dass**
der Energiespeicher (4) Hochkapazitäts-Kondensatoren aufweist.

11. Serviertrolley nach Anspruch 9 oder 10,
**dadurch gekennzeichnet, dass**
Sicherheitsschalter zum Abschalten des Antriebs (3) bei Erreichen einer oberen und/oder unteren Grenzposition vorgesehen ist/sind.

12. Serviertrolley nach Anspruch 11,
**dadurch gekennzeichnet, dass**
der Sicherheitsschalter als eine Prallplatte ausgebildet ist.

13. Serviertrolley nach einem der vorangegangenen Ansprüche,
**dadurch gekennzeichnet, dass**
der Antrieb (4) eine Indexiereinrichtung aufweist.

## Claims

1. Catering trolley for passenger cabins, in particular of aircraft, with a box-shaped main body (1), the interior of which is designed as a receiving space and which has receiving elements (21) for the spaced-apart holding of a plurality of filled trays, wherein a conveying device with a vertical conveying direction for the filled trays is provided, the conveying device having a drive (3) and conveyor belts (20) with the receiving elements (21) which are designed to engage on opposite sides (11) of the trays, **characterized in that** a storage space (19) for the conveyor belts (20) is formed in an upper region of the main body.

2. Catering trolley according to Claim 1, **characterized in that** the conveyor belts (20) are provided with formations for bringing about a predefined folding operation.

3. Catering trolley according to Claim 2, **characterized in that** folding joints (23, 24) which run transversely with respect to a conveying direction are formed on the conveyor belts (20).

4. Catering trolley according to one of the preceding claims, **characterized in that** the folding joints are provided in an alternating manner individually or in pairs on opposite sides of the conveyor belt (20).

5. Catering trolley according to one of the preceding claims, **characterized in that** the conveyor belts (20) are prestressed in a direction facing out of the belt plane.

6. Catering trolley according to Claim 5, **characterized in that** the conveyor belts (20) are thermally prestressed.

7. Serving trolley according to one of the preceding claims, **characterized in that** the conveyor belts (20) are produced from a polypropylene material.

8. Serving trolley according to one of the preceding claims, **characterized in that** the conveyor belts (20) have flame-resistant additives.

9. Catering trolley according to one of the preceding claims, **characterized in that** the drive (3) comprises a motor (30), an energy store (4) and a switching device (5).

10. Catering trolley according to Claim 9, **characterized in that** the energy store (4) has high-capacity capacitors.

11. Serving trolley according to Claim 9 or 10, **characterized in that** a safety switch/safety switches is/are provided in order to switch off the drive (3) when an upper and/or lower limit position is reached.

12. Catering trolley according to Claim 11, **characterized in that** the safety switch is designed as an impact plate.

13. Catering trolley according to one of the preceding claims, **characterized in that** the drive (4) has an indexing device.

## Revendications

1. Chariot de service pour des cabines de passagers, en particulier d'avions, avec un corps principal en forme de caisson (1) dont l'intérieur est conçu comme un compartiment de réception et qui comporte des éléments de réception (21) pour porter à distance les unes des autres une pluralité de plateaux remplis, dans lequel
il est prévu un dispositif de transport avec un sens de transport vertical pour les plateaux remplis qui comporte un entraînement (3) et des bandes transporteuses (20) avec les éléments de réception (21) qui sont conçues pour venir en prise sur des côtés opposés (11) des plateaux, **caractérisé en ce qu'**un compartiment de stockage (19) pour les bandes transporteuses (20) est prévu dans une zone supérieure du corps principal.

2. Chariot de service selon la revendication 1,
**caractérisé en ce que**
les bandes transporteuses (20) sont dotées de configurations permettant de réaliser un pliage prédéfini.

3. Chariot de service selon la revendication 2,
**caractérisé en ce que**
des joints de pliage (23, 24) s'étendant transversalement à un sens de transport sont formés sur les bandes transporteuses (20).

4. Chariot de service selon l'une quelconque des revendications précédentes,
**caractérisé en ce que**
les joints de pliage sont prévus alternativement individuellement ou par paires sur des côtés opposés de la bande transporteuse (20).

5. Chariot de service selon l'une quelconque des revendications précédentes,
**caractérisé en ce que**
les bandes transporteuses (20) sont précontraintes dans une direction partant du plan de bande.

6. Chariot de service selon la revendication 5,
**caractérisé en ce que**
les bandes transporteuses (20) sont précontraintes thermiquement.

7. Chariot de service selon l'une quelconque des revendications précédentes,
**caractérisé en ce que**
les bandes transporteuses (20) sont fabriquées à partir d'une matière en polypropylène.

8. Chariot de service selon l'une quelconque des revendications précédentes,
**caractérisé en ce que**
les bandes transporteuses (20) comportent des additifs empêchant la combustion.

9. Chariot de service selon l'une quelconque des revendications précédentes,
**caractérisé en ce que**
l'entraînement (3) comprend un moteur (30), un accumulateur d'énergie (4) et un dispositif de couplage (5).

10. Chariot de service selon la revendication 9,
**caractérisé en ce que**
l'accumulateur d'énergie (4) comporte des condensateurs de haute capacité.

11. Chariot de service selon la revendication 9 ou 10,
**caractérisé en ce que**
il est prévu un commutateur/des commutateurs de sécurité pour arrêter l'entraînement (3) lorsqu'une position limite supérieure et/ou inférieure est atteinte.

12. Chariot de service selon la revendication 11,
**caractérisé en ce que**
le commutateur de sécurité est conçu comme une plaque déflectrice.

13. Chariot de service selon l'une quelconque des revendications précédentes,
**caractérisé en ce que**
l'entraînement (3) comprend un dispositif d'indexation.
